# EUROPEAN PATENT APPLICATION

(11) **EP 4 790 000 A1**
(43) Date of publication of application: **12.08.2026**
(21) Application number: 25217400.8
(22) Date of filing: 20.11.2025
(51) Int. Cl.: B66B 1/32

(54) **ELEVATOR SYSTEM HAVING ENHANCED ELEVATOR CAR DECELERATION**

(30) Priority: 07.02.2025 IN 202511010600
(71) Applicant: Otis Elevator Company, Farmington, Connecticut 06032 (US)
(72) Inventor: Shivanna, Rudresha, 560105 Bangalore (IN); Rahul, HR, 560105 Bangalore (IN); Anand, R, 560105 Bangalore (IN)
(74) Representative: Schmitt-Nilson Schraud Waibel Wohlfrom Patentanwälte Partnerschaft mbB

(57) **Abstract**

An elevator system includes a motor configured to drive a traction sheave, the motor including motor windings; a brake configured to slow or stop rotation of the motor, the brake including a brake coil; a reverse bias diode connected in parallel with the brake coil through a latching relay; an external braking circuit connected to the motor windings through a brake contact; a controller configured to control the latching relay and the brake contact to control deceleration of an elevator car.

## Description

Embodiments described herein relate to elevator systems, and particularly to elevator systems having enhanced elevator car deceleration.

Elevator systems equipped with disc brakes have the ability to control elevator car speed faster in case of emergencies, which results in quick elevator car deceleration during certain situations. During a hard stop or an emergency stop (e.g., in response to a fault or a safety chain opening), passengers in the elevator car may experience deceleration, also referred to as jerk. It is desirable to reduce the amount of deceleration experienced by passengers in the elevator car.

According to an embodiment, an elevator system includes a motor configured to drive a traction sheave, the motor including motor windings; a brake configured to slow or stop rotation of the motor, the brake including a brake coil; a reverse bias diode connected in parallel with the brake coil through a latching relay; an external braking circuit connected to the motor windings through a brake contact; a controller configured to control the latching relay and the brake contact to control deceleration of an elevator car.

Particular embodiments further may include at least one, or a plurality of, the following optional features, alone or in combination with each other.

In addition to one or more of the features described herein, or as an alternative, further embodiments may include wherein the controller is configured to close the latch relay and close the brake contact in response to a speed of the elevator car.

In addition to one or more of the features described herein, or as an alternative, further embodiments may include wherein the controller is configured to close the latch relay and close the brake contact in response to the speed of the elevator car exceeding a threshold.

In addition to one or more of the features described herein, or as an alternative, further embodiments may include wherein the threshold is 0.5 meters per second.

In addition to one or more of the features described herein, or as an alternative, further embodiments may include wherein the motor comprises a permanent magnet synchronous machine.

In addition to one or more of the features described herein, or as an alternative, further embodiments may include wherein the external braking circuit includes braking resistors.

In addition to one or more of the features described herein, or as an alternative, further embodiments may include wherein the braking resistors are connected to the motor windings in a delta configuration.

According to another embodiment, a method of controlling the elevator system includes detecting a speed of the elevator car; comparing the speed to a threshold; in response to the speed exceeding the threshold, closing the latching relay.

Particular embodiments further may include at least one, or a plurality of, the following optional features, alone or in combination with each other.

In addition to one or more of the features described herein, or as an alternative, further embodiments may include confirming that the reverse bias diode is connected across the brake coil.

In addition to one or more of the features described herein, or as an alternative, further embodiments may include initiating an emergency stop of the elevator car upon determining that the reverse bias diode is an open circuit.

In addition to one or more of the features described herein, or as an alternative, further embodiments may include confirming that drive signals are being provided to the motor.

In addition to one or more of the features described herein, or as an alternative, further embodiments may include initiating an emergency stop of the elevator car upon determining that the drive signals are not being provided to the motor.

In addition to one or more of the features described herein, or as an alternative, further embodiments may include confirming that that the brake contact is closed and the motor windings are connected to the external braking circuit.

In addition to one or more of the features described herein, or as an alternative, further embodiments may include initiating an emergency stop of the elevator car upon determining that the brake contact is not closed and the motor windings are not connected to the external braking circuit.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The present disclosure is illustrated by way of example and not limited by the accompanying figures in which like reference numerals indicate similar elements.
FIG. 1 is a schematic illustration of an elevator system that may employ various embodiments of the present disclosure.
FIG. 2 depicts a system configured to provide enhanced elevator car deceleration in an example embodiment.
FIG. 3 is a flowchart of a process for providing enhanced elevator car deceleration in an example embodiment.

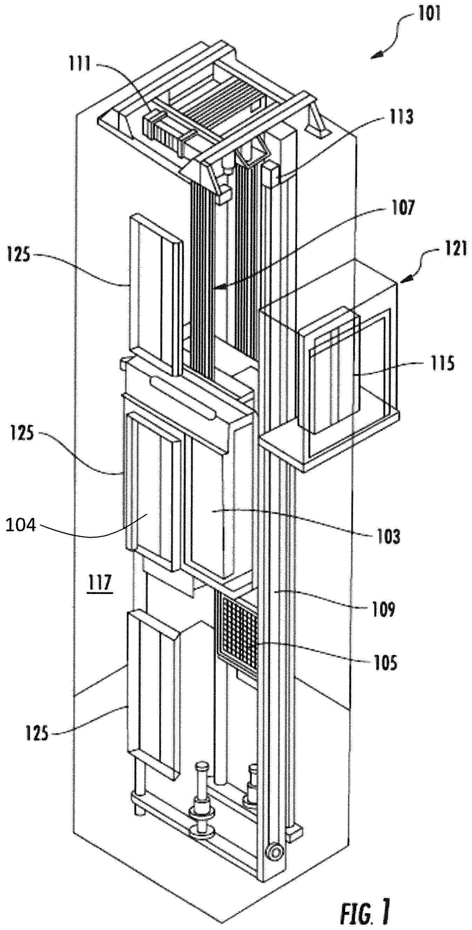

FIG. 1 is a perspective view of an elevator system 101 including an elevator car 103, a counterweight 105, a tension member 107, a guide rail 109, a machine 111, a position reference system 113, and a controller 115. The elevator car 103 and the counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft or the hoistway 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of the elevator car 103 and/or the counterweight 105, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along the guide rail 109, the elevator car 103 may stop at one or more landings 125 as controlled by the controller 115. Although shown in the controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network (e.g., cloud computing), etc.

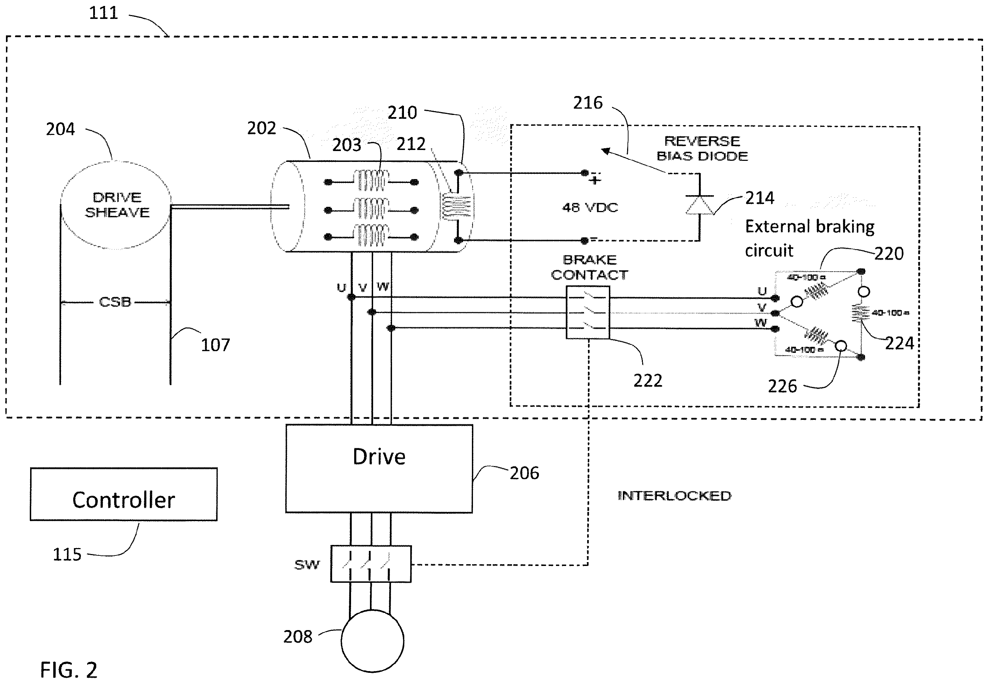

The machine 111 may include a motor 202 (FIG. 2) or similar driving mechanism. In accordance with embodiments of the disclosure, the machine 111 is configured to include an electrically driven motor 202. The power supply for the motor 202 may be any power source, including a power grid, which, in combination with other components, is supplied to the motor 202. The machine 111 may include a traction sheave 204 (FIG. 2) that imparts force to tension member 107 to move the elevator car 103 within elevator shaft 117.

The elevator system 101 also includes one or more elevator doors 104. The elevator door 104 may be attached to the elevator car 103 or the elevator door 104 may be located on a landing 125 of the elevator system 101, or both. Embodiments disclosed herein may be applicable to both an elevator door 104 attached to the elevator car 103 or an elevator door 104 located on a landing 125 of the elevator system 101, or both. The elevator door 104 opens to allow passengers to enter and exit the elevator car 103.

FIG. 2 depicts a machine 111 configured to provide enhanced elevator car deceleration in an example embodiment. Several components of FIG. 2 are in communication with the controller 115. Such communication may be performed over known wired (e.g., CANBUS, ethernet) and/or wireless (e.g., 802.11, IoT) communication protocols.

The machine 111 includes a motor 202 which drives a traction sheave 204 to impart motion to the elevator car 103. The motor 202 may be a three phase, surface-mounted permanent magnet synchronous machine (SPMSM). The motor 202 includes motor windings 203. The motor 202 operates in response to drive signals from a drive 206. The drive 206 may include a rectifier-inverter to convert power from an AC main power supply 208 into drive signals to drive the motor 202. The controller 115 provides command signals (e.g., pulse width modulation (PWM) commands) to the drive 206 to produce the drive signals, as is known in the art. The drive signals in FIG. 2 are three phase drive signals, labelled u, v, and m.

The machine includes a brake 210 coupled to the motor 202 and configured to slow or stop rotation of the motor 202. The brake 210 slows or stops the motor 202 in response to brake commands from the controller 115. The brake 210 may be a disc brake operated by a brake coil 212. A reverse bias diode 214 is connected in parallel with the brake coil 212, through a latch relay 216. The latch relay 216 may be closed in response to a signal from the controller 115. When the latch relay 216 is closed, the reverse bias diode 214 conducts current to suppress the back electromotive force (EMF) generated in the brake coil 212, when the input voltage to the brake coil 212 is zero.

The windings 203 of the motor 202 are connected to an external braking circuit 220 though a brake contact 222. The brake contact 222 may be a multipole switch controlled by the controller 115. Each phase of motor windings 203 is connected to a switch in the brake contact 222. The external braking circuit 220 may include braking resistors 224 connected, for example, in a delta configuration, to each phase of motor windings 203 (labeled u,v,w) of the motor 202. When the brake contact 222 is closed, the motor windings 203 of the motor 202 are shorted together, through the braking resistors 224, to produce braking torque and absorb the high amounts of energy generated by stopping the motor 202. In some embodiments, (for example, lower duty machines having high stator resistance) the external braking circuit 220 does not require braking resistors 224, and the external braking circuit 220 shorts the motor windings 203. Sensors 226 (e.g., voltage sensors) may be installed on each phase of the external braking circuit 220. The sensors 226 are in communication with the controller 115 to allow the controller 115 to confirm that the external braking circuit 220 is connected to the motor 202.

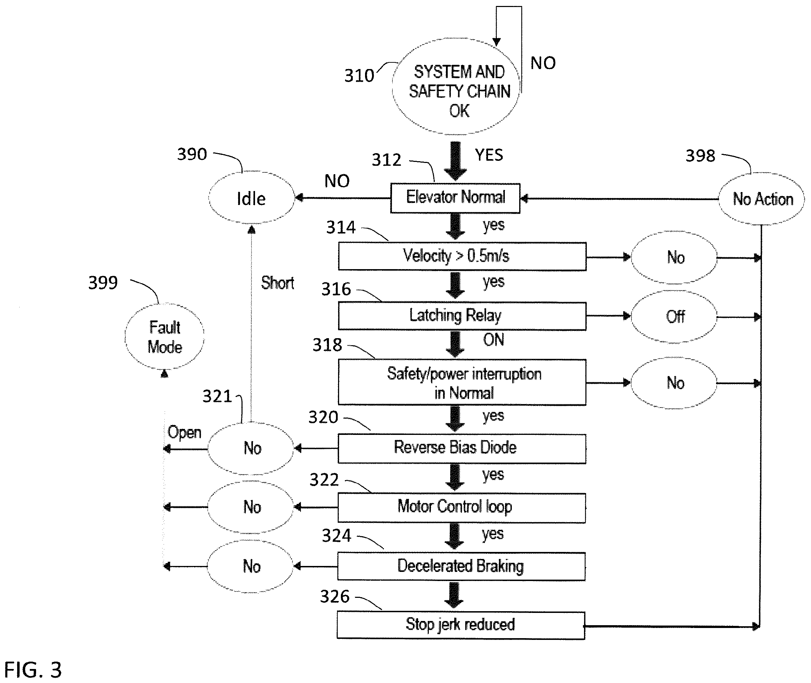

FIG. 3 is a flowchart of a process for providing enhanced elevator car 103 deceleration in an example embodiment. The process may be implemented by the controller 115. The process begins at 310 where the controller 115 determines if the elevator system 101 is operational (e.g., no faults) and the safety chain closed. If not, the controller 115 will not allow movement of the elevator car 103 and the process stays at 310.

If the if the elevator system 101 is operational and the safety chain closed at 310, flow proceeds to 312 where the controller 115 confirms that the elevator system 101 is in a normal operating mode (e.g., not in a maintenance mode or other non-operational mode). If the elevator system 101 is not in a normal operating mode, flow proceeds to 390 where the elevator system 101 remains in an idle mode until a normal operating mode is entered. The idle mode at 390 corresponds to a system state where there are no pending calls (e.g., no hall calls or destination calls) and elevator car 103 is stationed at a floor corresponding to the last call serviced or stationed at a parking floor with car doors 104 closed.

From 312, if the elevator system 101 is in a normal operating mode, flow proceeds to 314 where the controller 115 determines if the elevator car 103 is traveling at a speed greater than a threshold. In the example shown in FIG. 3, the threshold is 0.5 meters per second. If the elevator car 103 is not traveling at a speed greater than the threshold, flow proceeds to 398 where no action is taken to provide enhanced deceleration of the elevator car 103.

If at 314 the elevator car 103 is traveling at a speed greater than the threshold, flow proceeds to 316 where the controller 115 closes the latching relay 216. If the controller 115 cannot close the latching relay 216, e.g., due to a fault, the latching relay 216 is considered off and flow proceeds to 398 where no action is taken to provide enhanced deceleration of the elevator car 103.

If at 316 the latching relay 216 is closed, flow proceeds to 318 where the controller 115 confirms that the safety chain for elevator system 101 is closed and/or the power status is normal (e.g., no faults at the AC main power supply 208). If the controller 115 cannot confirm that the safety chain for elevator system 101 is closed and/or the power status is normal (e.g., no faults at the AC main power supply 208), flow proceeds to 398 where no action is taken to provide enhanced deceleration of the elevator car 103. At 318, the controller 115 may detect unforeseen errors occurring during an elevator running situation and direct the process to 398. Such errors require the elevator system to stop immediately. Such errors may include, for example, incoming source failures (e.g., faults at the AC main power supply) and/or elevator safety errors in response to a fault or a safety chain opening.

If at 318 the controller 115 confirms that the safety chain for elevator system 101 is closed and/or the power status is normal, flow proceeds to 320 where the controller 115 confirms that the reverse bias diode 214 is connected across the brake coil 212. This may be performed by monitoring current through the reverse bias diode 214. This indicates that brake 210 is being applied.

If the controller 115 cannot confirm the reverse bias diode 214 is connected across the brake coil 212, flow proceeds to 321, where the controller 115 determines if the reverse bias diode is shorted or open. If the reverse bias diode is shorted, the process flows to 390 where the elevator system 101 enters the idle mode. If the reverse bias diode is open, the process flows to 399, which indicates a fault mode, and the elevator car 103 may be instructed to execute an emergency stop.

If at 320 the controller 115 confirms that that the reverse bias diode 214 is connected across the brake coil 212, flow proceeds to 322 where the controller 115 confirms that drive signals (e.g., for motor phases u, v, w) are being provided by the drive 206 to the motor 202. This indicates that motor 202 is being instructed to slow and stop, in addition to the brake 210 being applied.

If the controller 115 cannot confirm that the drive signals are being provided by the drive 206 to the motor 202, flow proceeds to 399, where the controller 115 indicates a fault mode and the elevator car 103 may be instructed to execute an emergency stop.

If at 322 the controller 115 confirms the drive signals are being provided by the drive 206 to the motor 202, flow proceeds to 324 where the controller 115 confirms that the brake contact 222 is closed and the motor windings 203 are connected to the external braking circuit 220. This may be performed by the controller 115 monitoring signals (e.g., voltages) from the sensors 226.

If the controller 115 cannot confirm that the brake contact 222 is closed and the motor windings 203 are connected to the external braking circuit 220, flow proceeds to 399, where the controller 115 indicates a fault mode and the elevator car 103 may be instructed to execute an emergency stop.

If at 324 the controller 115 confirms that the brake contact 222 is closed and the motor windings 203 are connected to the external braking circuit 220, flow proceeds to 326 where the elevator car 103 is stopped with enhanced deceleration to reduce jerk on the elevator car 103.

Embodiments provide an elevator system that provides enhanced (e.g., smooth) deceleration through both a reverse biasing diode and an external braking circuit 220. The system components may be installed on new installations of retrofit on existing elevator systems.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification and/or the claims, specify the presence of stated features, steps, operations, elements, and/or components, but do not preclude the presence or addition of one or more other features, steps, operations, elements, components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. An elevator system comprising:
a motor configured to drive a traction sheave, the motor including motor windings;
a brake configured to slow or stop rotation of the motor, the brake including a brake coil;
a reverse bias diode connected in parallel with the brake coil through a latching relay;
an external braking circuit connected to the motor windings through a brake contact;
a controller configured to control the latching relay and the brake contact to control deceleration of an elevator car.

2. The elevator system of claim 1, wherein the controller is configured to close the latch relay and close the brake contact in response to a speed of the elevator car.

3. The elevator system of claim 2, wherein the controller is configured to close the latch relay and close the brake contact in response to the speed of the elevator car exceeding a threshold.

4. The elevator system of claim 3, wherein the threshold is 0.5 meters per second.

5. The elevator system of any of claims 1 to 4, wherein the motor comprises a permanent magnet synchronous machine.

6. The elevator system of any of claims 1 to 5, wherein the external braking circuit includes braking resistors.

7. The elevator system of claim 6, wherein the braking resistors are connected to the motor windings in a delta configuration.

8. A method of controlling the elevator system according to claim 1, the method comprising:
detecting a speed of the elevator car;
comparing the speed to a threshold;
in response to the speed exceeding the threshold, closing the latching relay.

9. The method of claim 8, further comprising:
confirming that the reverse bias diode is connected across the brake coil.

10. The method of claim 9, further comprising:
initiating an emergency stop of the elevator car upon determining that the reverse bias diode is an open circuit.

11. The method of any of claims 8 to 10, further comprising:
confirming that drive signals are being provided to the motor.

12. The method of any of claims 8 to 11, further comprising:
initiating an emergency stop of the elevator car upon determining that the drive signals are not being provided to the motor.

13. The method of any of claims 8 to 12, further comprising:
confirming that that the brake contact is closed and the motor windings are connected to the external braking circuit.

14. The method of claim 13, further comprising:
initiating an emergency stop of the elevator car upon determining that the brake contact is not closed and the motor windings are not connected to the external braking circuit.
